# EUROPÄISCHE PATENTSCHRIFT

(11) **EP 1 160 147 B1**
(45) Veröffentlichungstag und Bekanntmachung des Hinweises auf die Patenterteilung: **02.07.2003**
(21) Anmeldenummer: 01109989.2
(22) Anmeldetag: 25.04.2001
(51) Int. Cl.: B62D 25/14, B62D 29/00

(54) **Hohlträger für eine Kraftfahrzeugkarosserie**
Hollow beam for the body of a motor vehicle
Poutre creuse pour une carrosserie de véhicule automobile

(30) Priorität: 31.05.2000 DE 10026981
(43) Veröffentlichungstag der Anmeldung: 05.12.2001
(73) Patentinhaber: Bayerische Motoren Werke Aktiengesellschaft, 80809 München (DE)
(72) Erfinder: Bognar, Josef, 82229 Seefeld (DE); Karl, Rüdiger, 84030 Landshut (DE)

(56) Entgegenhaltungen:
- DE-A- 3 013 745
- DE-A- 19 724 036
- DE-C- 3 642 978
- MORPHY G: "TUBE HYDROFORMING ANALYSIS. A DISCUSSION OF AUTOMOTIVE STRUCTURAL PARTS PROVIDES A GUIDE TO TUBULAR HYDROFORMING TECHNOLOGY" AUTOMOTIVE ENGINEERING INTERNATIONAL, SAE INTERNATIONAL, US, Bd. 106, Nr. 7, 1. Juli 1998 (1998-07-01), Seiten 91-94, XP000777055 ISSN: 0098-2571

## Beschreibung

Die Erfindung bezieht sich auf einen Hohlträger für eine Kraftfahrzeugkarosserie und insbesondere einen Querträger für eine Kraftfahrzeug-Instrumententafel, nach dem Oberbegriff des Patentanspruchs 1.

Aus der DE 36 42 978 C1 ist ein Aluminium-Hohlträger dieser Art bekannt, der in einem druckgussähnlichen Gießverfahren mit Hilfe eines Aluminium-Hohlprofils in der Weise hergestellt wird, dass das Aluminiumprofil in einer Gießform fixiert und anschließend mit schmelzflüssigem Aluminium umgossen wird, wobei eine zuvor auf die Profilaußenseite aufgebrachte Beschichtung dafür sorgt, dass sich das Aluminiumprofil und der Aluminium-Gusskörper zu einem integralen Bauteil verbinden. Dabei muss das Aluminiumprofil eine vorgegebene Mindestwandstärke besitzen, um den beim Gussvorgang einwirkenden thermischen und mechanischen Belastungen standzuhalten, und zusätzlich muss auch für den Gusskörper aus gusstechnologischen Gründen eine bestimmte Mindestwandstärke eingehalten werden, mit der Folge, dass die Gesamtdicke des Hohlträgers insbesondere in den schwächer belasteten Bereichen gussbedingt örtlich höher liegt als aus Steifigkeits- und Festigkeitsgründen erforderlich, so dass eine derartige Tragstruktur ungeachtet der Verwendung eines Leichtmetalls ein immer noch unerwünscht hohes Eigengewicht besitzt. Hinzu kommt, dass Querschnittsänderungen im Profil-Innenquerschnitt, z.B. eine aus Steifigkeitsgründen geforderte Querschnittsaufweitung in den anbindungsseitigen Endbereichen des Hohlträgers, aus Herstellungsgründen nur im begrenzten Umfang möglich sind, wenn nicht, wie aus der oben zitierten Druckschrift ebenfalls bekannt, das Innenprofil in fertigungsmäßig aufwendiger Weise aus zwei in Längsrichtung geteilten Rohrhälften zusammengesetzt wird.

Aufgabe der Erfindung ist es, den Leichtmetall-Hohlträger der eingangs genannten Art so auszubilden, dass auf fertigungstechnisch einfache Weise eine lastspezifische Gestaltung und vor allem deutliche Gewichtsverringerung zu erzielen ist.

Diese Aufgabe wird erfindungsgemäß durch den im Patentanspruch 1 gekennzeichneten Hohlträger gelöst.

Erfindungsgemäß erstreckt sich das gusskernbildende, integral in den Hohlträger einbezogene Innenprofil lediglich über eine Teillänge des Hohlträgers, während dieser endseitig als reines, innenprofilfreies Gussteil mittels eines wiederverwendbaren, werkzeugseitigen Formkernstücks ausgebildet ist. Hierdurch wird das Leichtbaupotential des Hohlträgers in doppelter Hinsicht verbessert: zum einen entfällt im Endbereich des Hohlträgers der Gewichtsanteil eines allein aus gusstechnischen Gründen erforderlichen Innenprofils, und zum anderen lässt sich in diesem zumeist lastkritischen Hohlträgerbereich die Querschnittsgeometrie des Hohlträgers auf fertigungsmäßig einfache Weise in weiten Grenzen beliebig gestalten und so die konstruktive Steifigkeit und Festigkeit gewichtsoptimal auf die jeweils vorliegenden Betriebsbelastungen abstimmen, so dass sich eine wesentlich verbesserte Materialausnutzung und somit weitere Gewichtsersparnis ergibt. Hinzu kommt, dass das Formkernstück gleichzeitig die Fixierung des Innenprofils während des Gussvorgangs übernimmt, so dass hierfür keine gesonderten Werkzeugteile erforderlich sind.

In besonders bevorzugter Ausgestaltung der Erfindung ist der Gusskörper nach Anspruch 2 als im Druckgussverfahren hergestellter Magnesium-Formkörper ausgebildet, wodurch zusätzlich zu den im Wege der Druckgusstechnik erzielbaren höheren Steifigkeits- und Festigkeitswerten insofern eine weitere Gewichtsersparnis erreicht wird, als die Wandstärke eines lastgerecht dimensionierten Magnesium-Formkörpers weitgehend über dem gusstechnisch vorgeschriebenen Mindestmaß liegt und daher örtliche Materialaufdickungen, die bei Verwendung anderer Leichtmetalle allein aus Guss-, nicht aber aus Festigkeits- oder Steifigkeitsgründen erforderlich sind, entfallen können. Im Hinblick auf eine weitere Reduzierung des Gewichts- und Fertigungsaufwands empfiehlt es sich nach Anspruch 3, den Magnesium-Formkörper mit integral angegossenen Anschlusselementen zur Befestigung von und/oder an Anbauteilen auszustatten. Um eine innige Bindung zwischen Innenprofil und Magnesium-Formkörper zu gewährleisten, ist das Innenprofil nach Anspruch 4 auf der Außenseite vorzugsweise mit einer haftungsunterstützenden Beschichtung versehen.

Eine noch weitergehende Gewichtsreduzierung wird nach Anspruch 5 in besonders bevorzugter Weise dadurch erreicht, dass das Innenprofil in den Bereichen ausreichender Eigensteifigkeit und -festigkeit, also vergleichsweise geringer Belastungen, vom Gussmaterial freigehalten ist.

Im Hinblick auf eine hohe Einbauflexibilität des Hohlträgers ist das Innenprofil nach Anspruch 6 zweckmäßigerweise der Raumform des Hohlträgers entsprechend vorgebogen.

In weiterer, besonders bevorzugter Ausgestaltung besteht das Innenprofil nach Anspruch 7 aus einem dünnwandigen Hohl-, insbesondere Kunststoffprofil und ist beim Gussvorgang innendruckbeaufschlagt. Dies gestattet die Verwendung sehr schwach dimensionierter und dementsprechend gewichtsparender Innenprofile, ohne dass die Gefahr besteht, dass deren formgebende Außenkontur unter den beim Gussvorgang einwirkenden Belastungen verloren geht.

Weitere Merkmale der Erfindung ergeben sich aus der nachfolgenden, beispielsweisen Beschreibung in Verbindung mit den Zeichnungen. Diese zeigen in stark schematisierter Darstellung in
- **Fig. 1**: einen Schnitt eines Gießwerkzeugs zur Herstellung eines erfindungsgemäß ausgebildeten Hohlträgers nach dem Einsetzen des Innenprofils, jedoch noch vor dem Einfüllen der Magnesiumschmelze; und
- **Fig. 2**: einen nach Fig. 1 hergestellten Hohlträger in ebenfalls geschnittener Darstellung.

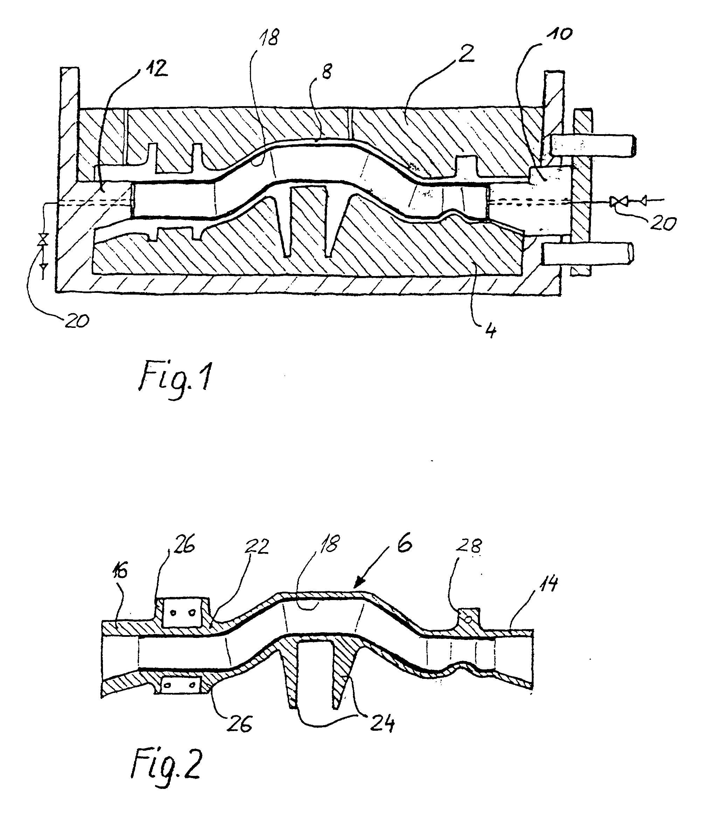

Das in Fig. 1 dargestellte Druckgusswerkzeug besteht aus zwei Formhälften 2 und 4, die im geschlossenen Zustand eine der Außenkontur des herzustellenden Hohlträgers 6 (Fig. 2) entsprechende Formkavität 8 begrenzen. Seitlich am Druckgusswerkzeug sind wiederverwendbare Formkernstücke 10, 12 angeordnet, die die Innenkontur des Hohlträgers 6 im Bereich der Endabschnitte 14, 16 ausformen und sich soweit in die Formkavität 8 erstrecken, dass sie nach Fertigstellung des Hohlträgers 6 problemlos aus den Endabschnitten 14, 16 entfernbar, also etwa - wie das Formkernstück 10 gemäß Fig. 1 - seitlich verfahrbar am Gusswerkzeug montiert sind.

Der Zwischenraum zwischen den Formkernstücken 10, 12 wird durch ein dünnwandiges, entsprechend der Innenkontur des Hohlträgers 6 etwa aus faserverstärktem, wärmebeständigen Kunststoff vorgeformtes Profilteil 18 überbrückt, welches im geöffneten Zustand der Formhälften 2, 4 in das Gusswerkzeug eingesetzt und unter endseitiger Abdichtung positionsgenau durch die Formkernstücke 10, 12 fixiert wird, wobei das Profilteil 18 formschlüssig an die Formkernenden anschließt.

Beim Befüllen der Formkavität 8 mit flüssiger Magnesiumschmelze wird das Profilteil 18 mittels einer Druckregelung 20 innendruckbeaufschlagt, so dass es gegen die einwirkenden Druckgusskräfte eine ausreichende Formstabilität besitzt, wobei das Druckmittel, vorzugsweise Druckluft, gleichzeitig aus Gründen eines Überhitzungsschutzes eine Kühlung des Profilteils 18, gegebenenfalls im Wege einer Durchspülung, bewirken kann.

Fig. 2 zeigt den fertiggestellten Hohlträger 6 in Form eines Querträgers für die Instrumententafel eines Kraftfahrzeugs, der aus Versteifungsgründen zwischen die A-Säulen der Kraftfahrzeugkarosserie eingesetzt wird. Der Hohlträger 6 besteht aus dem an den Endabschnitten 14, 16 innenprofilfreien Magnesium-Gusskörper 22 und dem den Innenquerschnitt des Hohlträgers 6 zwischen den anbindungsseitigen Endabschnitten 14, 16 bildenden Profilteil 18, welches vor dem Druckgussvorgang mit einer die Magnesiumhaftung unterstützenden Beschichtung versehen ist und dadurch eine innige Bindung mit dem Gusskörper 22 eingeht.

Wie ersichtlich, besitzt der Magnesium-Gusskörper 22 eine ungleichförmige, den örtlichen Steifigkeits- und Festigkeitsanforderungen unter Einbeziehung der Lastfestigkeit des Innenprofils 18 entsprechende Wandstärke, und in denjenigen Bereichen, wo der Lastwiderstand des Innenprofils 18 für sich allein ausreicht, kann dieses sogar vom Gussmaterial freigehalten sein.

Aus Gründen einer weiteren Gewichtsersparnis sind am Gusskörper 22 gleichzeitig Anschlusselemente, etwa die Stützstreben 24 zur Befestigung am Fahrzeugtunnel, Anschlussflansche 26 für die Lenksäule oder Befestigungslaschen 28 für das Klimagerät oder die Instrumententafel, integral mitangegossen.

Anstelle eines Kunststoff-Hohlprofils kann natürlich auch ein Innenprofil aus einem anderen Material, etwa Stahl, Aluminium oder Magnesium oder auch ein Schaumstoff-Vollprofil verwendet werden, das aus Gewichtsgründen so schwach bemessen ist, dass die geforderte Festigkeit und Steifigkeit des Hohlträgers allein von dem Magnesium-Gusskörper aufgebracht wird.

## Patentansprüche

1. Hohlträger für eine Kraftfahrzeugkarosserie, insbesondere Querträger für eine Kraftfahrzeug-Instrumententafel, bestehend aus einem vorgefertigten, formgebenden Innenprofilteil (18) und einem äußeren, integral mit dem Innenprofilteil (18) vergossenen, lastaufnehmenden Leichtmetall-Gusskörper (22), **dadurch gekennzeichnet, dass**
der Leichtmetall-Gusskörper (22) zumindest einseitig mit einem innenprofilfreien, gleichzeitig mit dem Innenprofilteil (18) vergossenen Endabschnitt (14, 16) versehen ist, welcher an einem wiederverwendbaren, werkzeugseitigen, das Innenprofilteil beim Gießvorgang fixierenden Formkernstück (10, 12) ausgeformt ist.

2. Hohlträger nach Anspruch 1, **dadurch gekennzeichnet, dass**
der Gusskörper (22) als im Druckgussverfahren hergestellter Magnesium-Formkörper ausgebildet ist.

3. Hohlträger nach Anspruch 2, **dadurch gekennzeichnet, dass**
der Magnesium-Formkörper (22) integral angegossene Anschlusselemente (24, 26, 28) zur Befestigung von und/oder an Anbauteilen besitzt.

4. Hohlträger nach Anspruch 2 oder 3, **dadurch gekennzeichnet, dass**
das Innenprofilteil (18) auf der Außenseite mit einer haftungsunterstützenden Beschichtung versehen ist.

5. Hohlträger nach einem der vorhergehenden Ansprüche, **dadurch gekennzeichnet, dass**
das Innenprofilteil (18) in örtlich schwach belasteten Bereichen vom Gussmaterial freigehalten ist.

6. Hohlträger nach einem der vorhergehenden Ansprüche, **dadurch gekennzeichnet, dass**
das Innenprofilteil (18) der Raumform des Hohlträgers (6) entsprechend vorgebogen ist.

7. Hohlträger nach einem der vorhergehenden Ansprüche, **dadurch gekennzeichnet, dass**
das Innenprofilteil (18) aus einem dünnwandigen Hohl-, insbesondere Kunststoffprofil hergestellt und beim Gussvorgang innendruckbeaufschlagt ist.

## Claims

1. A hollow bearer for a motor vehicle body, especially a transverse bearer for a vehicle instrument panel, comprising a prefabricated shaping inner profile part (18) and an outer load-bearing light-metal casting (22) integrally cast with the inner profile part (18), **characterised in that**
the light-metal casting (22) is provided at least one end with an end portion (14, 16) free from the inner profile and cast simultaneously with the inner profile part (18) and moulded on a reusable core member (10, 12) adjoining the mould and fixing the inner profile during the casting operation.

2. A hollow bearer according to claim 1, **characterised in that** the casting (22) is a moulded magnesium member produced by die casting.

3. A hollow bearer according to claim 2, **characterised in that** the magnesium moulding (22) has integrally cast connecting elements (24, 26, 28) for fastening and/or fastening to attached parts.

4. A hollow bearer according to claim 2 or claim 3, **characterised in that** the inner profile part (18) is given an adhesion-promoting coating on its outside.

5. A hollow bearer according to any of the preceding claims, **characterised in that** the inner profile part (18) is kept free from cast material at lightlyloaded places.

6. A hollow bearer according to any of the preceding claims, **characterised in that** the inner profile part (18) is bent beforehand in accordance with the three-dimensional shape of the hollow bearer (6).

7. A hollow bearer according to any of the preceding claims, **characterised in that** the inner profile part (18) is made from a thin-walled hollow, especially plastics material, profile and is internally pressurised during the casting operation.

## Revendications

1. Poutre creuse pour une carrosserie de véhicule automobile, notamment traverse pour le tableau de bord d'un véhicule, composée d'une pièce profilée intérieure (18) préfabriquée, donnant la forme, et d'un corps coulé en métal léger (22), extérieur, coulé de manière intégrale avec la pièce de profil intérieur (18) et recevant la charge,
**caractérisée en ce que**
le corps coulé en métal léger (22) est muni au moins d'un côté d'un segment d'extrémité (14, 16) coulé en même temps avec le profil intérieur (18) mais ne comportant pas de profilé intérieur, ce segment d'extrémité étant formé sur un élément de noyaux de moule (10, 12) réutilisable, prévu sur l'outillage et qui tient la pièce de profil intérieur au cours de l'opération de coulée.

2. Poutre creuse selon la revendication 1,
**caractérisée en ce que**
le corps coulé (22) est un corps coulé en magnésium réalisé par un procédé de coulée sous pression.

3. Poutre creuse selon la revendication 2,
**caractérisée en ce que**
le corps coulé en magnésium (22) comporte de façon intégrale des éléments de raccordement (24, 26, 28) pour la fixation d'équipements et/ou pour être fixés sur des équipements.

4. Poutre creuse selon la revendication 2 ou 3,
**caractérisée en ce que**
la pièce de profil intérieur (18) est munie sur son côté extérieur d'un revêtement favorisant l'accrochage.

5. Poutre creuse selon l'une des revendications 1 à 4,
**caractérisée en ce que**
la pièce de profil intérieur (18) est libre de matière coulée dans les zones qui ne sont que faiblement sollicitées localement.

6. Poutre creuse selon l'une des revendications précédentes,
**caractérisée en ce que**
la pièce de profil intérieur (18) est cintrée préalablement en fonction de la forme tridimensionnelle de la poutre creuse (6).

7. Poutre creuse selon l'une des revendications précédentes,
**caractérisée en ce que**
la pièce de profil intérieur (18) est réalisée à partir d'un profil creux, à paroi mince, notamment en matière plastique, et au cours de l'opération de coulée ce profil est mis intérieurement en pression.
